# EUROPEAN PATENT APPLICATION

(11) **EP 2 660 273 A1**
(43) Date of publication of application: **06.11.2013**
(21) Application number: 11853441.1
(22) Date of filing: 27.05.2011
(51) Int. Cl.: C08J 5/18, B29D 7/01, C08G 73/10, B29C 35/02

(54) **METHOD FOR PREPARING POLYIMIDE FILM**

(30) Priority: 31.12.2010 KR 20100140836
(71) Applicant: Kolon Industries, Inc., Gwacheon-si, Gyeonggi-do 427-709 (KR)
(72) Inventor: HONG, Ki Il, Yongin-si Gyeonggi-do 448-170 (KR); PARK, Sang Yoon, Yongin-si Gyeonggi-do 446-771 (KR); PARK, Hyo Jun, Yongin-si Gyeonggi-do 448-160 (KR); JUNG, Hak Gee, Yongin-si Gyeonggi-do 448-172 (KR)
(74) Representative: Ter Meer Steinmeister & Partner
(86) International application number: PCT/KR2011/003909
(87) International publication number: WO 2012/091231

(57) **Abstract**

The present invention relates to a method for preparing a polyimide film through a roll-to-roll method, and more specifically to a method for preparing a polyimide film with excellent optically isotropic properties through an annealing process during the manufacture of the polyimide film.

## Description

### Technical Field

The present invention relates to a method of preparing a transparent polyimide film having low birefringence and excellent optical isotropy.

### Background Art

Generally, a polyimide (PI) film is formed of a polyimide resin. Here, a polyimide resin is a high heat-resistance resin prepared by a process including the steps of: solution-polymerizing an aromatic dianhydride with an aromatic amine or an aromatic diisocyante to obtain a polyamic acid derivative; and ring-closing and dewatering the polyamic acid derivative at high temperature to imidize the polyamic acid derivative.

A polyimide rein, which is an unmelted ultrahigh heat-resistance resin, has been widely used in the field of high-tech heat-resistant materials, such as automobile materials, aircraft materials, spacecraft materials and the like, and electronic materials, such as insulation coating agents, insulation films, semiconductors, electrode protection films for TFT-LCDs and the like, because it has excellent oxidation resistance, heat resistance, radiation resistance, low-temperature characteristics, chemical resistance and the like. Recently, a polyimide resin has also been used in the field of display materials, such as optical fibers, liquid crystal oriented films and the like, and transparent electrode films by adding conductive filler to the polyimide resin or coating the surface of the polyimide film with conductive filler.

However, a polyimide resin is problematic in that its transparency in a visible light region is low because it is colored brown or yellow due to its high aromatic ring density, in that its light transmittance is low because it provides a yellow color, and in that it is difficult to use it as an optical material because it has high birefringence.

In order to solve such a problem, a method of refining monomers and a solvent and then polymerizing the refined monomers has been attempted, but this method is also problematic in that light transmittance is not greatly improved.

U.S. Patent No. 5053480 discloses a method of preparing a polyimide resin using an aliphatic cyclic dianhydride instead of an aromatic dianhydride. This method is advantageous in that, when the polyimide resin prepared by this method is formed into a solution phase or a film, its transparency and color is improved, but is problematic in that the improvement of transparency thereof is restricted and thus satisfactory transparency cannot be obtained, and in that thermal and mechanical characteristics thereof are deteriorated.

Further, U.S. Patent Nos. 4595548, 4603061, 4645824, 4895972, 5218083, 5093453, 5218077, 5367046, 5338826, 5986036 and 6232428 and Korean Unexamined Patent Application Publication No. 2003-0009437 reported a novel polyimide structure, the light transmittance and color transparency of which is improved by using a monomer having a bent structure whose m-site, rather than its p-site, is connected with a functional group such as -O-, -SO₂-, CH₂- or the like, an aromatic dianhydride having a substituent group such as -CF₃ or the like and an aromatic diamine monomer on the condition that its thermal characteristics are not greatly deteriorated. However, they reported that the birefringence of the novel polyimide structure is insufficient.

Further, in order to produce polyimide films in commercial quantity, a roll to roll method must be employed. However, when polyimide films are produced by a roll to roll method, there is a problem in that tension must be applied in a machinery direction (MD), and thus orientation is conducted at the time of film formation by shear stress applied during a manufacture process, so it is difficult for the polyimide film to have optical isotropy.

### Disclosure

### Technical Problem

An object of the present invention is to provide a method of preparing a transparent polyimide film having low birefringence and excellent optical isotropy using a roll to roll method.

### Technical Solution

In order to accomplish the above object, an aspect of the present invention provides a method of preparing a polyimide film using a roll to roll method, wherein annealing is performed at 200 ∼ 400 °C for 200 ∼ 2000 seconds under the condition that tension is 10 N or less in a machinery direction (MD).

The method of preparing a polyimide film may include the steps of: dissolving and reacting a dianhydride and a diamine in a solvent to obtain a polyamic acid solution; and casting the polyamic acid solution on a support and then heating it to 200 ∼ 400 °C for 5 ∼ 400 seconds to imidize the polyamic acid solution.

In the method, the solvent may be at least one organic solvent selected from the group consisting of m-cresol, N-methyl-2-pyrrolidone (NMP), dimethylformamide (DMF), dimethylacetamide (DMAc), dimethylsulfoxide (DMSO), acetone, and diethyl acetate.

Further, the method of preparing a polyimide film may include the steps of: dissolving and reacting a dianhydride and a diamine in a first solvent to obtain a polyamic acid solution; imidizing the polyamic acid solution; introducing the imidized solution into a second solvent and then filtering and drying the imidized solution to obtain a polyimide resin solid; dissolving the polyimide resin solid in the first solvent to form a polyimide solution; and casting the polyimide solution on a support and then drying the polyimide solution.

In the method, the first solvent may be at least one organic solvent selected from among m-cresol, N-methyl-2-pyrrolidone (NMP), dimethylformamide (DMF), dimethylacetamide (DMAc), dimethylsulfoxide (DMSO), acetone and diethyl acetate, and the second solvent may be a solvent having lower polarity than the first solvent, and may be at least one solvent selected from among water, alcohols, ethers and ketones.

### Best Mode

Hereinafter, the present invention will be described in detail.

The present invention provides a method of preparing a polyimide film using a roll to roll method, wherein annealing is performed at 200 ∼ 400 °C for 200 ∼ 2000 seconds under the condition that tension in a machinery direction (MD) is 10 N or less.

That is, in the method of preparing a polyimide film according to the present invention, the optical isotropy of the polyimide film can be improved by performing an annealing process at 200 ∼ 400 °C for 200 ∼ 2000 seconds under the condition that tension in a machinery (MD) is 10 N or less.

In the present invention, the method of preparing a polyimide film may include the steps of: dissolving and reacting a dianhydride and a diamine in a solvent to obtain a polyamic acid solution; and casting the polyamic acid solution on a support and then heating the cast polyamic acid solution to 200 ∼ 400°C for 5 - 400 seconds.

The dianydride may be at least one aromatic dianhydride selected from among 2,2-bis(3,4-dicarboxyphenyl)hexafluoropropane dianhydride (FDA), 4-(2,5-dioxotetrahydrofuran-3-yl)-1,2,3,4-tetrahydronaphthalene-1,2-dicarboxylic anhydride (TDA) and 4,4'-(4,4'-isopropylidenediphenoxy)bis(phthalic anhydride)(HBDA). The dianhydride may further include at least one selected from among pyromellitic dianhydride (PMDA), biphenyltetracarboxylic dianhydride (BPDA), oxydiphthalic dianhydride (ODPA) and 1,1'-bicyclohexane-3,4,3,4-tetracarboxyl dianhydride (H-BPDA).

The diamine may be at least one aromatic diamine selected from among 2,2-bis[4-(4-aminophenoxy)-phenyl]propane (6HMDA), 2,2'-bis(trifluoromethyl)-4,4'-diaminobiphenyl (2,2'-TFDB), 3,3'- bis(trifluoromethyl)4,4'-diaminobiphenyl (3,3'-TFDB), 4,4'-bis(3-aminophenoxy)diphenylsulfone (DBSDA), bis(3-aminophenyl)sulfone (3DDS), bis(4-aminophenyl)sulfone (4DDS), 1,3-bis(3-aminophenoxy)benzene (APB-133), 1,4-bis(4-aminophenoxy)benzene (APB-134), 2,2'-bis[3(3-aminophenoxy)phenyl]hexafluoropropane (3-BDAF), 2,2'-bis[4(4-aminophenoxy)phenyl]hexanfluoropropane (4-BDAF), 2,2'-bis(3-aminophenyl)hexafluoropropane (3,3'-6F), 2,2'-bis(4-aminophenyl)hexafluoropropane (4,4'-6F), oxydianiline (ODA), and 1-(4-aminophenyl)-1,3,3-trimethyl-1H-inden-5-amine (TMDA). However, examples of the diamine are not limited thereto.

The dianhydride and the diamine are dissolved in a solvent in an equimolar amount and reacted with each other to obtain a polyamic acid solution.

Although reaction conditions are not particularly limited, it is preferred that reaction temperature be -20 ~ 80°C and reaction time be 2 - 48 hours. Further, it is more preferred that the reaction be performed under an inert gas (argon, nitrogen or the like) atmosphere.

The solvent may be at least one organic solvent selected from the group consisting of m-cresol, N-methyl-2-pyrrolidone (NMP), dimethylformamide (DMF), dimethylacetamide (DMAc), dimethylsulfoxide (DMSO), acetone, and diethyl acetate.

The method of preparing a polyimide film using the polyamic acid solution may be conducted using a commonly-known method. That is, a polyimide film can be obtained by casting the polyamic acid solution on a support to imidize the cast polyamic acid solution.

In this case, the imidization of the polyamic acid solution may be performed by thermal imidization, chemical imidization or a combination of thermal imidization and chemical imidization. In the chemical imidization, a dehydration agent, which is represented by an acid anhydride such as acetic anhydride or the like, and an imidization catalyst, which is represented by a tertiary amine such as isoquinoline, β-picoline, pyridine or the like, are added to the polyamic acid solution. In the thermal imidization or the combination of thermal imidization and chemical imidization, the heating conditions of the polyamic acid solution can be changed by the kind of the polyamic acid solution and the thickness of a polyimide film to be prepared.

In the case of a combination of thermal imidization and chemical imidization, a preparation example of a polyimide film is specifically described as follows. First, a dehydration agent and an imidization catalyst are added to a polyamic acid solution, and then cast on a support. Then, the cast polyamic acid solution is heated to 80 - 200 °C, preferably, 100 ∼ 180 °C to activate the hydration agent and the imidization catalyst to partially cure and dry the polyamic acid solution, thus separating a gelled polyamic acid film from the support. Then, the gelled polyamic acid film is heated to 200 ∼ 400 °C for 5 - 400 seconds to obtain a polyimide film.

Subsequently, the polyimide film is annealed at 200 ∼ 400 °C for 200 ∼ 2000 seconds to allow the polyimide film to have excellent optical isotropy.

Further, in the present invention, the method of preparing a polyimide film may include the steps of: dissolving and reacting a dianhydride and a diamine in a first solvent to obtain a polyamic acid solution; imidizing the polyamic acid solution; introducing the imidized solution into a second solvent and then filtering and drying the imidized solution to obtain a polyimide resin solid; dissolving the polyimide resin solid in the first solvent to form a polyimide solution; and casting the polyimide solution on a support and then drying the polyimide solution.

The first solvent is not particularly limited as long as it can dissolve polyamic acid. As the first solvent, at least one polar solvent (commonly-known reaction solvent) selected from among m-cresol, N-methyl-2-pyrrolidone (NMP), dimethylformamide (DMF), dimethylacetamide (DMAc), dimethylsulfoxide (DMSO), acetone and diethyl acetate may be used. In addition, a low-boiling solvent, such as tetrahydrofuran (THF), chloroform or the like, or a low-absorptivity solvent, such as γ-butyrolactone or the like, may be used as the first solvent.

The amount of the first solvent is not particularly limited. However, in order to obtain a polyamic acid solution having suitable molecular weight and viscosity, the amount of the first solvent may be 50 ∼ 95 wt%, and preferably 70 ∼ 90 wt%, based on the total weight of a polyamic acid solution.

Meanwhile, in the present invention, a polyimide film may also be prepared from the obtained polyamic acid solution as follows. That is, after the obtained polyamic acid solution is imidized, the imidized polyamic acid solution is introduced into a second solvent, and then filtered and dried to obtain a polyimide resin solid. Then, the obtained polyimide resin solid is dissolved in the first solvent to form a polyimide solution, and then polyimide solution is formed into a polyimide film by a film-forming process.

As described above, the imidization of the polyamic acid solution may be performed by thermal imidization, chemical imidization or a combination of thermal imidization and chemical imidization. According to a specific example of imidizing the polyamic acid solution using a combination of thermal imidization and chemical imidization, the polyamic acid solution can be imidized by adding a dehydration agent and an imidization catalyst to the obtained polyamic acid solution and then heating the polyamic acid solution to 20 - 180 °C for 1 - 12 hours.

The first solvent may be the same as the solvent used in the solution polymerization of polyamic acid. As the second solvent, a solvent that cannot dissolve the polyamic acid polymer used to obtain a polyimide resin solid may be used. Further, as the second solvent, a solvent having lower polarity than the first solvent, among solvents that can apply a principle of precipitating a solid using solubility difference, may be used. Specifically, the second solvent may be at least one selected from among water, alcohols, ethers and ketones.

In this case, although the amount of the second solvent is not particularly limited, it is preferred that the second solvent be used in an amount of 5 - 20 times the total weight of the polyamic acid solution to be prepared.

After the obtained polyimide resin solid is filtered, the filtered polyimide resin solid may be dried at a temperature of 50 ∼ 150 °C for 2 - 24 hours, in consideration of the boiling point of the first solvent remaining in the second solvent and the solidified polyimide resin.

Thereafter, the polyimide solution, in which a polyimide resin solid is dissolved, is cast on a support, and then slowly heated to 40 ∼ 400 °C for 1 minute - 8 hours at a heating rate of 1 - 10 °C /min to obtain a polyimide film.

Subsequently, the obtained polyimide film is annealed at 200 ∼ 400 °C for 200 ∼ 2000 seconds to allow the polyimide film to have excellent optical isotropy.

The thickness of the polyimide film is not particularly limited. However, the thickness of the polyimide film may be 10 ∼ 250 µm, and preferably 25 ∼ 150 µm.

Meanwhile, while the length of the polyimide film may preferably be 0.3 - 10 m in consideration of width required in the related field and processing efficiency, the length of the wound polyimide film may be 10 m or more.

### Mode for Invention

Hereinafter, the present invention will be described in more detail with reference to the following Example.

### <Example>

A 1L reactor provided with a stirrer, a nitrogen injector, a dripping funnel, a temperature controller and a cooler was filled with 405 kg of N,N-dimethylacetamide (DMAc) while passing nitrogen through the reactor, the temperature of the reactor was adjusted to 25 °C, 40.05 kg (2 mol) of ODA was dissolved in the N,N-dimethylacetamide (DMAc) to obtain a solution, and then the temperature of the solution was maintained at 25 °C. Subsequently, 61.2 kg (2 mol) of H-BPDA was added to this solution, and then stirred for 30 minutes to perform a reaction. The reaction was performed at 25 °C for 12 hours to obtain a polyamic acid solution having a solid content of 20 wt% and a viscosity of 200 poise.

After the reaction, the obtained polyamic acid solution was applied onto a stainless steel belt, cast to a thickness of 125 µm, and then dried by hot air at 150 °C for 20 minutes to obtain a polyimide film. This polyimide film was heat-treated with hot air at 200 °C for 10 minutes and infrared light at 300 °C for 10 minutes.

Thereafter, as an annealing process, the polyimide film was slowly heated by infrared light to a maximum temperature of 350 °C for 8.3 minutes, and then slowly cooled.

In this case, the tension of the polyimide film in a machinery direction (MD) was 10 N, which is low. In order to obtain a polyimide film having low tension, the polyimide film was transported with it floating without passing through a guide roll (thickness: 100 µm).

## Claims

1. A method of preparing a polyimide film using a roll to roll method, wherein annealing is performed at 200 ∼ 400 °C for 200 ∼ 2000 seconds under the condition that tension in a machinery direction (MD) is 10 N or less.

2. The method of claim 1, comprising the steps of:
dissolving and reacting a dianhydride and a diamine in a solvent to obtain a polyamic acid solution; and
casting the polyamic acid solution on a support and then heating it to 200 ∼ 400 °C for 5 - 400 seconds to imidize the polyamic acid solution.

3. The method of claim 1, comprising the steps of:
dissolving and reacting a dianhydride and a diamine in a first solvent to obtain a polyamic acid solution;
imidizing the polyamic acid solution;
introducing the imidized solution into a second solvent and then filtering and drying the imidized solution to obtain a polyimide resin solid;
dissolving the polyimide resin solid in the first solvent to form a polyimide solution; and
casting the polyimide solution on a support and then drying the polyimide solution.

4. The method of claim 2, wherein the solvent is at least one organic solvent selected from the group consisting of m-cresol, N-methyl-2-pyrrolidone (NMP), dimethylformamide (DMF), dimethylacetamide dimethylsulfoxide (DMSO), acetone, and diethyl acetate.

5. The method of claim 3, wherein the first solvent is at least one organic solvent selected from among m-cresol, N-methyl-2-pyrrolidone (NMP), dimethylformamide (DMF), dimethylacetamide dimethylsulfoxide (DMSO), acetone and diethyl acetate, and the second solvent is a solvent having lower polarity than the first solvent, and is at least one solvent selected from among water, alcohols, ethers and ketones
